# FASCICULE DE BREVET EUROPEEN

(11) **EP 2 899 128 B1**
(45) Date de publication et mention de la délivrance du brevet: **09.11.2016**
(21) Numéro de dépôt: 15152248.9
(22) Date de dépôt: 23.01.2015
(51) Int. Cl.: B64F 1/04, B64C 39/02

(54) **Dispositif d'accueil d'un drone sur un véhicule et véhicule associé à un tel dispositif**
Aufnahmevorrichtung für eine Drohne auf einem Fahrzeug, und Fahrzeug, das mit dieser Vorrichtung ausgestattet ist
Docking device of a drone on a vehicle and vehicle associated with such a device

(30) Priorité: 24.01.2014 FR 1400189
(43) Date de publication de la demande: 29.07.2015
(73) Titulaire: NEXTER Systems, 42328 Roanne (FR)
(72) Inventeur: Sautet, Jean-Yves, 18023 Bourges (FR); Possidente, Dominique, 18023 Bourges (FR)
(74) Mandataire: Chaillot, Geneviève

(56) Documents cités:
- EP-A1- 1 767 453
- WO-A1-2013/055265
- JP-A- H09 302 628
- US-A- 3 948 467
- US-A1- 2011 006 164

## Description

Le domaine technique de l'invention est celui des dispositifs d'accueil pour drones embarqués à bord de véhicules.

L'emport de drones civils ou militaires à bord de véhicules implique qu'ils puissent être mis en oeuvre de façon autonome à partir de l'intérieur du véhicule, sans devoir exposer des personnels embarqués aux menaces et intempéries de l'environnement dans lequel le véhicule évolue.

Le brevet RU2470250 divulgue un véhicule militaire comportant un coffre pouvant abriter un drone. Le coffre est apte à s'ouvrir ou se refermer automatiquement au moyen de panneaux situés sur le dessus du coffre. Lorsque le coffre est ouvert, une table élévatrice, sur laquelle repose le drone, amène celui-ci jusqu'à l'extérieur du coffre et permet ainsi au drone de décoller ou d'atterrir.

Cependant, pour que l'avantage d'un décollage et atterrissage autonome sans intervention de personnel du véhicule soit conservé, il faut que l'arrimage du drone soit sûr et automatique afin que le drone ne soit pas projeté, heurté ou perdu durant son transport et que cette opération d'arrimage ou de désarrimage soit également indépendante de toute intervention manuelle sur le drone.

Le brevet US2011/006164 décrit une plateforme solidaire d'une navire et pouvant recevoir un drone. La plateforme comporte des moyens d'arrimage par dépression ou bien magnétiques. Cependant un tel dispositif nécessite une alimentation en énergie pour assurer le maintien du drone sur la plateforme et il impose également un dispositif de commande pouvant couper la fourniture d'énergie pour libérer le drone.

Le brevet JPH09-302628 propose une plateforme pour drone disposée à l'arrière d'un véhicule terrestre. La plateforme comporte un moyen élévateur permettant de faire entrer ou sortir le drone d'un logement du véhicule. Ce document ne donne aucune solution permettant l'arrimage automatique du drone dans une position de transport et sa libération automatique en position de décollage.

L'invention se propose de résoudre ce problème d'automatisation de l'arrimage/désarrimage.

L'invention a pour objet un dispositif d'accueil pour drone destiné à être embarqué à bord d'un véhicule caractérisé en ce que le dispositif d'accueil comporte :
un support destiné à supporter un drone,
un moyen d'élévation du support destiné à déplacer le support entre une position basse située au voisinage d'une base du moyen d'élévation et une position élevée,
au moins un plot aimanté solidaire de la base du moyen d'élévation, plot aimanté destiné à coopérer avec un élément d'arrimage magnétique solidaire d'un drone pour assurer l'arrimage de ce dernier en position basse.

Avantageusement, le moyen d'élévation comporte au moins deux bielles montées en ciseau et aptes à élever le support parallèlement à la base du moyen d'élévation.

Avantageusement, le moyen d'élévation comporte un vérin électrique apte à mouvoir le support entre la position basse et la position élevée.

Avantageusement, le plot aimanté comporte un aimant permanent.

Avantageusement, l'aimant permanent comporte un alliage de néodyme.

L'invention porte également sur un véhicule destiné à transporter un drone et caractérisé en ce qu'il comporte un dispositif d'accueil selon l'invention.

L'invention sera mieux comprise à la lecture de la description suivante, description faite en référence aux dessins en annexe, dessins dans lesquels :
La figure 1 représente une vue latérale d'un véhicule comportant un dispositif selon l'invention en position basse.
La figure 2 représente une vue latérale d'un véhicule comportant un dispositif selon l'invention en position élevée.
La figure 3 représente une vue de détail d'un dispositif selon l'invention en position basse.
La figure 4 représente une vue de détail d'un dispositif selon l'invention en position élevée.
La figure 5 représente une vue partielle d'un véhicule selon l'invention.

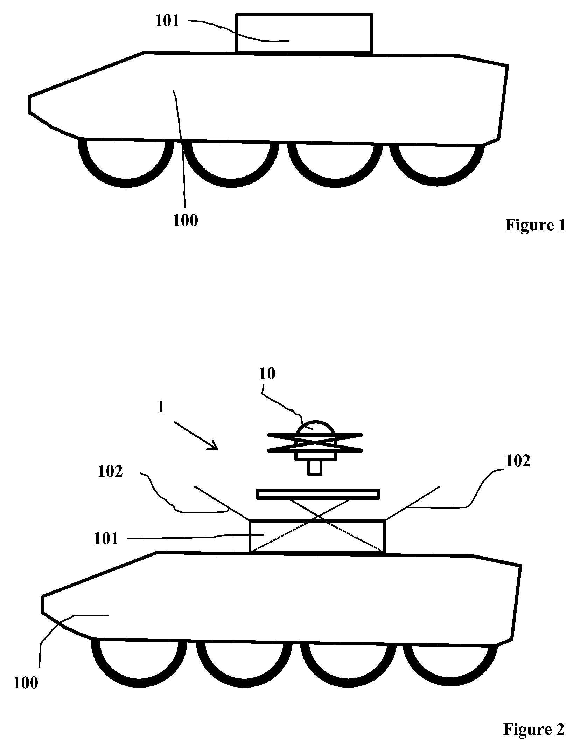

Selon la figure 1, un véhicule 100 comporte en superstructure, un coffre 101 destiné à abriter un drone volant.

Selon la figure 2, des portes 102 du coffre 101 sont ouvertes et un dispositif d'accueil 1 pour drone émerge du coffre. Un drone 10 est en vol au-dessus du dispositif d'accueil 1.

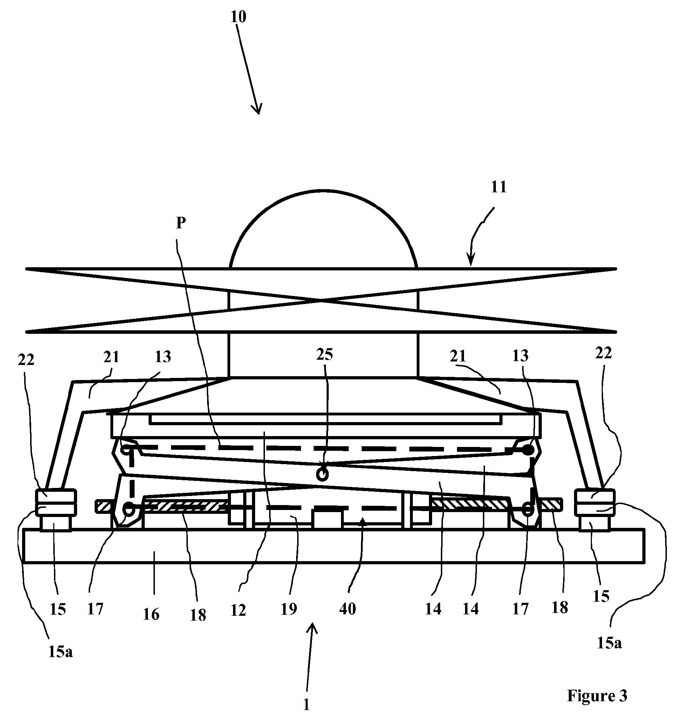

Selon la figure 3, et selon un mode de réalisation, un drone 10 comportant une voilure tournante à double rotors contrarotatifs 11 est posé sur le dispositif 1.

Le dispositif 1 comporte un support 12 sur lequel repose le drone 10. Le support 12 est lié par deux premières liaisons pivots glissantes 13 aux extrémités supérieures de deux bielles 14. Les liaisons pivots glissantes 13 comportent des galets aptes à se translater dans des goulottes situées dans le plan du support 12 permettant ainsi la rotation des bielles 14 et leur rapprochement ou leur écartement relatif.

L'extrémité inférieure des bielles 14 comporte des secondes liaisons pivot glissantes 17 similaires aux premières liaisons pivots glissantes et solidarisent l'extrémité inférieure des bielles 14 avec une base 16 du dispositif 1. Les goulottes des secondes liaisons pivot glissantes sont parallèles aux premières goulottes et sont donc aptes à permettre la translation de l'extrémité des bielles dans le plan de la base 16 (les goulottes et galets des liaisons pivots glissants ne sont pas représentés).

Chacune des secondes liaisons pivot glissantes inférieures 17 comporte un écrou (écrou non visible) traversé par une vis 18. Chaque vis 18 est entrainée par un moteur électrique 19, l'ensemble formant un vérin électrique 40 destiné à rapprocher ou à écarter les secondes extrémités des bielles 14 en vue d'abaisser ou de faire monter le support 12 relativement à la base 16. Les bielles sont de longueurs égales et sont assemblées par paire par un montage en ciseaux comportant une liaison pivot 25 située sensiblement au milieu de chaque bielle 14. L'ensemble des extrémités des bielles 14 forment un parallélogramme P quelle que soit leur position.

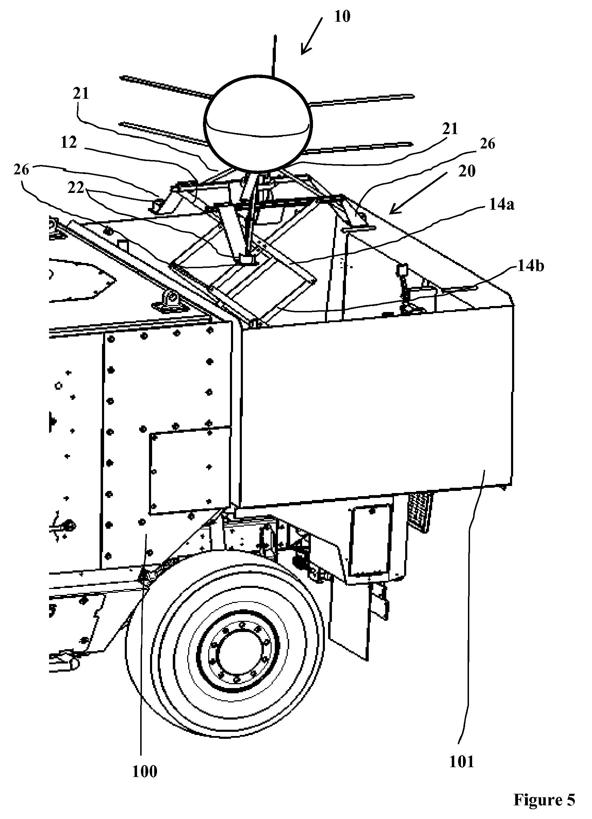

Comme visible à la figure 5, deux paires de bielles parallèles 14 sont placées en bordure de deux côtés opposés du support 12 pour plus de stabilité. Le moyen d'élévation 20 du support 12 ainsi formé par les bielles 14 et le vérin électrique 40 permet d'élever le support 12 parallèlement à la base 16. L'Homme du Métier pourra utiliser un vérin hydraulique ou pneumatique ou d'autres moyens moteurs pour fournir l'effort d'ascension et de descente du dispositif.

Selon la figure 3, le dispositif 1 est représenté dans une position dite basse plaçant le support 12 au voisinage de la base 16.

La base 16 porte de façon solidaire deux plots aimantés 15 placés de part et d'autre du moyen d'élévation 20. Selon le mode de réalisation représenté, la partie aimantée 15a des plots 15 comporte un alliage de néodyme formant un aimant puissant. L'Homme du Métier pourra également utiliser un aimant permanent classique à base de ferrite ou de Samarium/cobalt.

Le drone 10 comporte deux pattes de fixation 21 terminées dans leur partie inférieure par des tampons 22 en acier.

Ainsi dans la position représentée figure 3, les tampons 22 constituent des éléments d'arrimage du drone 10 sur le dispositif 1 par adhérence magnétique de l'acier sur l'alliage de néodyme. Le fort pouvoir magnétique du néodyme assure l'arrimage du drone 10. L'homme du Métier dimensionnera le nombre de plots 15 et la force des aimants 15a en fonction de la masse du drone 10 et des contraintes de transport que le drone 10 est amené à subir.

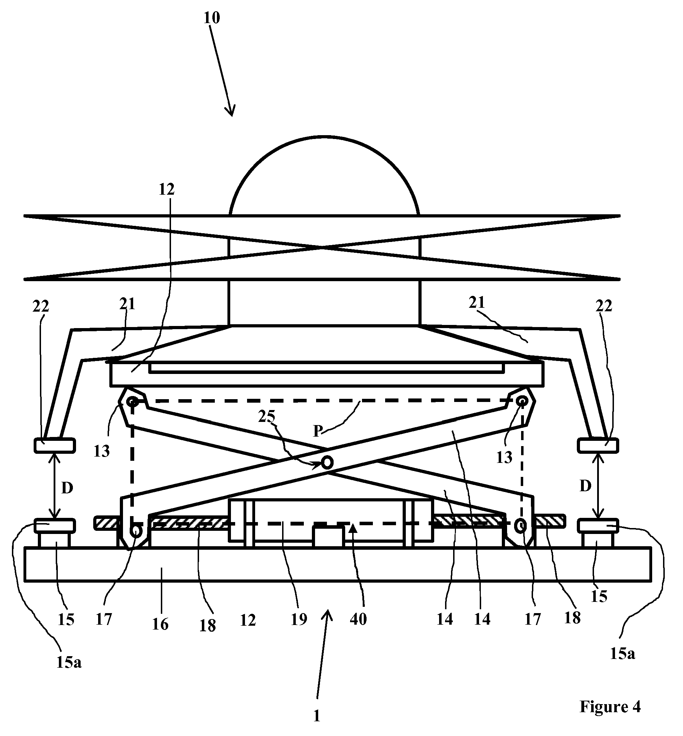

Selon la figure 4, la mise en rotation du vérin électrique 40 a provoqué le rapprochement des extrémités de chacune des bielles 14 et par conséquence l'élévation du support 12 exerçant ainsi un effort de décollement entre les éléments d'arrimage 22 et les plots magnétiques 15. Une distance D est établie à partir de laquelle l'influence magnétique des plots 15 sur les éléments d'arrimage 22 est négligeable au regard de l'effort de décollage du drone 10 qui peut alors quitter librement le dispositif d'accueil 1.

On notera que selon le mode de réalisation représenté, au moins les bielles 14 ou le support 12 sont en matériau amagnétique afin de ne pas influer sur le drone 10 par conduction de l'effet magnétique des plots 15. L'Homme du Métier dimensionnera le moyen d'élévation 20 afin qu'il produise un effort d'élévation suffisant pour contrer l'effort d'adhérence des plots aimantés 15 ainsi qu'une distance d'élévation D suffisante pour soustraire le drone aux effets magnétiques des plots 15.

Selon un autre mode de réalisation le mouvement de montée du support pourra être arrêté bien après que l'influence des aimants ait cessé, par exemple, pour amener le drone 10 à émerger entièrement au-dessus des bords d'un coffre tel que celui représenté sur le véhicule aux figures 2 et 5.

Avantageusement, l'invention permet le maintien sûr du drone sur le dispositif d'accueil 1 même en cas de coupure électrique du fait de la permanence de l'aimantation fixant les éléments d'arrimage.

Ainsi, il n'est pas nécessaire de faire intervenir du personnel directement sur le drone 10 ou sur le dispositif d'accueil 1, l'ensemble des opérations d'arrimage ou de désarrimage pouvant se faire automatiquement par simple élévation ou abaissement du moyen d'élévation 20.

Selon la figure 5 et selon un autre mode de réalisation, le moyen d'élévation 20 pourra comporter plusieurs séries de paires de bielles 14a, 14b superposées pour augmenter la course d'élévation. Le mode de réalisation du moyen d'élévation n'est pas limité au dispositif à bielles en ciseaux mais d'autres moyens non représentés tel que des tiges télescopiques (non représentées) pourront être employées.

On notera que le support 12 comporte des godets 26 sensiblement coniques avec la plus grande ouverture orientée vers le haut afin de guider chacun des éléments d'arrimage 22 vers les plots aimantés 15.

Il est évident pour l'Homme du Métier que le drone embarqué pourra être ou non à décollage vertical ou bien être remplacé par un chargement amovible disposant des mêmes interfaces de fixation sur le dispositif que le drone, à savoir des éléments d'arrimage magnétiques.

## Revendications

1. Dispositif d'accueil (1) pour drone (10) destiné à être embarqué à bord d'un véhicule (100) le dispositif d'accueil (1) comportant
un support (12) destiné à supporter un drone (10),
un moyen d'élévation (20) du support (12) destiné à déplacer le support (12) entre une position basse située au voisinage d'une base du moyen d'élévation (20) et une position élevée,
**caractérisé par**
au moins un plot aimanté (15) solidaire de la base du moyen d'élévation (20), plot aimanté destiné à coopérer avec un élément d'arrimage magnétique (22) solidaire d'un drone pour assurer l'arrimage de ce dernier en position basse.

2. Dispositif d'accueil (1) selon la revendication 1, **caractérisé en ce que** le moyen d'élévation (20) comporte au moins deux bielles (14) montées en ciseau et aptes à élever le support (12) parallèlement à la base du moyen d'élévation (20).

3. Dispositif d'accueil (1) pour drone (10) selon la revendication 2, **caractérisé en ce que** le moyen d'élévation (20) comporte un vérin électrique (19) apte à mouvoir le support (1) entre la position basse et la position élevée.

4. Dispositif d'accueil (1) pour drone (10) selon au moins une des revendications 1 à 3, **caractérisé en ce que** le plot aimanté (15) comporte un aimant permanent (15a).

5. Dispositif d'accueil (1) pour drone (10) selon la revendication 4, **caractérisé en ce que** l'aimant permanent (15a) comporte un alliage de néodyme.

6. Véhicule (100) destiné à transporter un drone (10), **caractérisé en ce qu'**il comporte un dispositif d'accueil (1) selon une des revendications 1 à 5.

## Patentansprüche

1. Aufnahmevorrichtung (1) für Drohne (10) zur Mitnahme in einem Fahrzeug (100), wobei die Aufnahmevorrichtung (1) folgendes umfasst:
einen Träger (12), um eine Drohne (10) zu tragen,
ein Hebemittel (20) für den Träger (12), um den Träger (12) zwischen einer Tieflage in der Nähe einer Basis des Hebemittels (20) und einer erhöhten Position hin und her zu bewegen,
**gekennzeichnet durch** mindestens eine magnetische Kontaktstelle (15) an der Basis des Hebemittels (20), die mit einem Element zur magnetischen Befestigung (22) zusammenwirkt, das einstückig mit einer Drohne ist, um die Befestigung letzterer in Tieflage zu sichern.

2. Aufnahmevorrichtung (1) nach Anspruch 1, **gekennzeichnet dadurch, dass** das Hebemittel (20) mindestens zwei Pleuelstangen (14) umfasst, die nach Art einer Schere montiert sind und geeignet sind, den Träger (12) parallel zur Basis des Hebemittels (20) zu heben.

3. Aufnahmevorrichtung (1) für Drohne (10) nach Anspruch 2, **gekennzeichnet dadurch, dass** das Hebemittel (20) einen elektrischen Stellzylinder (19) umfasst, der fähig ist, den Träger (1) zwischen der Tieflage und der Hochlage zu bewegen.

4. Aufnahmevorrichtung (1) für Drohne (10) nach mindestens einem der Ansprüche 1 bis 3, **gekennzeichnet dadurch, dass** die magnetische Kontaktstelle (15) einen Dauermagneten (15a) umfasst.

5. Aufnahmevorrichtung (1) für Drohne (10) nach Anspruch 4, **gekennzeichnet dadurch, dass** der Dauermagnet (15a) eine Neodymlegierung umfasst.

6. Fahrzeug (100) für den Transport einer Drohne (10), **gekennzeichnet dadurch, dass** es eine Aufnahmevorrichtung (1) nach einem der Ansprüche 1 bis 5 umfasst.

## Claims

1. A docking device (1) for drone (10) intended to be onboard a vehicle (100), the docking device (1) comprising:
a support (12) for supporting a drone (10),
a support (12) raising means (20) intended to move the support (20) between a low position located at the vicinity of a base of the raising means (20) and a raised position,
**characterised by** at least one magnetised stud (15) integral with the base of the raising means (20), the magnetised stud being intended to cooperate with a magnetic docking member (22) integral with a drone to ensure the docking of the latter in the low position.

2. The docking device (1) according to claim 1, **characterised in that** the raising means (20) comprises at least two connecting rods (14) mounted as scissors and able to raise the support (12) parallel to the base of the raising means (20).

3. The docking device (1) for drone (10) according to claim 2, **characterised in that** the raising means (20) comprises an electrical cylinder (19) able to move the support (12) between the low position and the raised position.

4. The docking device (1) for drone (10) according to at least one of claims 1 to 3, **characterised in that** the magnetized stud (15) comprises a permanent magnet (15a).

5. The docking device (1) for drone (10) according to claim 4, **characterised in that** the permanent magnet (15a) comprises a neodymium alloy.

6. A vehicle (100) intended to carry a drone (10), **characterised in that** it comprises a docking device (1) according to one of claims 1 to 5.
